# EUROPEAN PATENT APPLICATION

(11) **EP 4 552 957 A1**
(43) Date of publication of application: **14.05.2025**
(21) Application number: 23835464.1
(22) Date of filing: 03.07.2023
(51) Int. Cl.: B62D 55/10

(54) **LOWER TRAVELING BODY FOR CONSTRUCTION MACHINE**

(30) Priority: 05.07.2022 JP 2022108408
(71) Applicant: Hitachi Construction Machinery Co., Ltd., Tokyo 110-0015 (JP)
(72) Inventor: TAKAHASHI, Kaori, Tsuchiura-shi, Ibaraki 300-0013 (JP); TADA, Shigeya, Tsuchiura-shi, Ibaraki 300-0013 (JP); ITOU, Kei, Tsuchiura-shi, Ibaraki 300-0013 (JP); HIRATA, Kazuya, Tsuchiura-shi, Ibaraki 300-0013 (JP); HIKOYAMA, Kazuhiro, Tsuchiura-shi, Ibaraki 300-0013 (JP)
(74) Representative: MERH-IP Matias Erny Reichl Hoffmann Patentanwälte PartG mbB
(86) International application number: PCT/JP2023/024568
(87) International publication number: WO 2024/009932

(57) **Abstract**

A left vehicle width expanding/contracting device (15) expands and contracts a vehicle width of a lower traveling structure (4) by moving a left side frame (6) in the right-and-left direction relative to a center frame (5) by extending and contracting a rod (16B) of a hydraulic cylinder (16), and similarly, a right vehicle width expanding/contracting device expands and contracts the vehicle width of the lower traveling structure (4) by moving a right side frame in the right-and-left direction. The hydraulic cylinders (16) of the left and right vehicle width expanding/contracting devices (15) are each located between a drive wheel (9) and an idler wheel (10) and each mounted on the side frame (6).

## Description

### TECHNICAL FIELD

The present invention relates to a lower traveling structure for a construction machine such as a hydraulic excavator and a hydraulic crane.

### BACKGROUND ART

A hydraulic excavator, serving as a representative type of construction machine, includes a self-propelled lower traveling structure, an upper revolving structure provided rotatably on the lower traveling structure and a working mechanism provided rotatably forward of the upper revolving structure.

The lower traveling structure includes a center frame located in the center of a vehicle body, a side frame extending in the front-rear direction and mounted on both left and right sides of the center frame, a drive wheel provided at one end of the side frame in a length direction of the side frame, an idler wheel at other end of the side frame in the length direction of the side frame, and a crawler belt looped around the drive wheel and the idler wheel.

Hydraulic excavators are divided by changing the width dimension of a lower traveling structure into small-width form where the vehicle width is contracted so as to be accommodated within the transport limit width and large-width form where the vehicle width is expanded so as to improve the safety of the lower traveling structure in operation. In this case, the side frame is movable in the right-and-left direction (width direction) relative to the center frame. Also, the center frame is provided with a hydraulic cylinder serving as a power source moving the side frame (Patent Document 1).

### PRIOR ART DOCUMENT

### PATENT DOCUMENT

Patent Document 1: Japanese Patent Laid-Open No. 2004-243852 A

### SUMMARY OF THE INVENTION

Herein, hydraulic excavators, when transported, are subjected to restrictions on dimensions such as vehicle width, vehicle height and vehicle length and on the weight, etc. The dimension and weight restrictions are affected by certain times of a day and routes for transporting such hydraulic excavators. For example, in hydraulic excavators with no weight restriction, a side frame is moved in the right-and-left direction to reduce the width dimension of a lower traveling structure to be free from dimension restriction, as disclosed in Patent Document 1. Meanwhile, in hydraulic excavators with weight restriction, left and right side frames are removed from a center frame to reduce the vehicle body weight to be free from weight restriction.

However, in the hydraulic excavator of Patent Document 1, due to a hydraulic cylinder provided on a center frame, even removal of a side frame from the center frame cannot be effective enough to reduce the weight of a vehicle body to be transported, depending on the weight of the hydraulic cylinder and its relevant equipment. The resulting problem is that a working mechanism and others must not be removed to reduce the vehicle body weight and the operational efficiency for vehicle transport is low.

The hydraulic excavator of Patent Document 1 is configured to include a hydraulic cylinder in a space formed by projecting a bottom surface of the center frame downwardly. Thus, the lower traveling structure has a low minimum ground height, with part of the bottom surface of the center frame projecting downwardly. In fact, a traveling lower traveling structure with a low minimum ground height allows the center frame to readily interfere with concrete pieces, reinforcing bars and others, thereby failing to travel at some working sites and subsequently causing a low operational efficiency.

In view of the above-described problems of conventional technologies, an object of the present invention is to provide a lower traveling structure for a construction machine capable of reducing the weight of a vehicle body just by removal of a side frame, transporting the vehicle body with easy operations, and improving the operational efficiency of vehicles that are allowed to travel at more working sites by maintaining a large minimum ground height of a center frame.

A lower traveling structure for a construction machine according to the present invention includes: a center frame located in the center of a vehicle body; a side frame extending in the front-rear direction, mounted on both left and right sides of the center frame and movable in the right-and-left direction relative to the center frame; a drive wheel provided at one end of the side frame in a length direction of the side frame, an idler wheel at other end of the side frame in the length direction of the side frame, a crawler belt looped around the drive wheel and the idler wheel; and a vehicle width expanding/contracting device expanding and contracting a vehicle width by moving the side frame in the right-and-left direction relative to the center frame by extending and contracting a rod of a hydraulic cylinder, characterized in that the hydraulic cylinder of the vehicle width expanding/contracting device is located between the drive wheel and the idler wheel and mounted on the side frame.

According to the present invention, the weight of a vehicle body can be reduced just by removal of a side frame, and the vehicle body can be transported with easy operations. In addition, a large minimum ground height of a center frame can be maintained to improve the operational efficiency of vehicles that are allowed to travel at more working sites.

### BRIEF DESCRIPTION OF THE DRAWINGS

Fig. 1 is a left side view showing a hydraulic excavator with a lower traveling structure according to an embodiment of the present invention.
Fig. 2 is a perspective view showing a side frame mounted at a large-width position relative to a center frame.
Fig. 3 is a perspective view showing the side frame mounted at a small-width position relative to the center frame.
Fig. 4 is a perspective view showing a left traveling portion of the lower traveling structure viewed from the center frame side.
Fig. 5 is a perspective view showing from below the left traveling portion in Fig. 4 without part of an inner plate.
Fig. 6 is a plan view in partial broken showing the side frame located at the large-width position by a vehicle width expanding/contracting device.
Fig. 7 is a plan view in partial broken showing the side frame located at the small-width position by the vehicle width expanding/contracting device.
Fig. 8 is a plan view showing the relationship between the side frame at the small-width position and a connecting portion of the vehicle width expanding/contracting device.
Fig. 9 is a cross-sectional view showing the vehicle width expanding/contracting device mounted relative to the side frame.
Fig. 10 is a perspective view showing the configuration of the vehicle width expanding/contracting device mounted relative to the side frame without an inner plate.
Fig. 11 is a perspective view showing the configuration of the vehicle width expanding/contracting device mounted relative to the center frame.
Fig. 12 is a perspective view showing the configuration of the connecting portion of the vehicle width expanding/contracting device mounted relative to the center frame.

### MODE FOR CARRYING OUT THE INVENTION

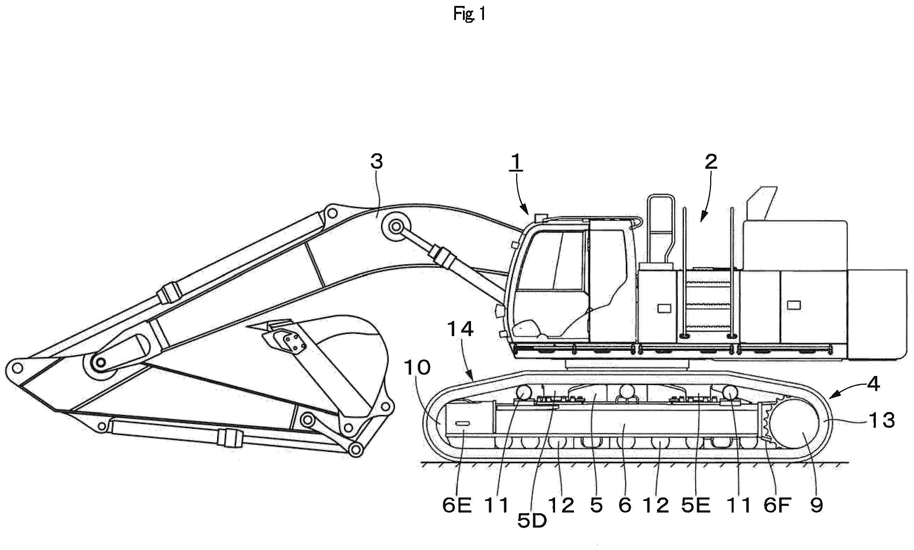

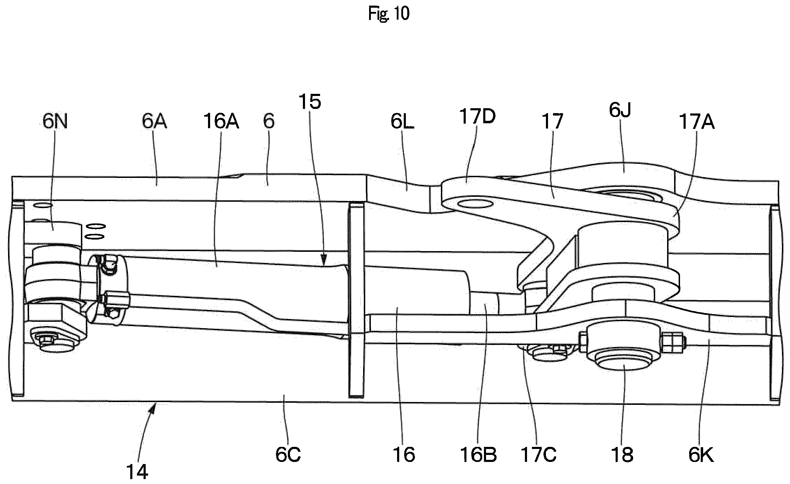

A representative type of lower traveling structure for a construction machine according to an embodiment of the present invention, by taking the case of a lower traveling structure for a hydraulic excavator serving as a typical construction machine, will be explained in detail with reference to Figs. 1 to 12.

In Fig. 1, a hydraulic excavator 1 includes a later-described lower traveling structure 4, an upper revolving structure 2 provided rotatably on the lower traveling structure 4, and a working mechanism 3 provided rotatably forward of the upper revolving structure 2 and excavating earth and sand, etc. The upper revolving structure 2 and the lower traveling structure 4 constitute a vehicle body.

The hydraulic excavator 1 of this embodiment is a large type of vehicle having a maximum width dimension that allows a width dimension of the upper revolving structure 2 to be within a limit width for transporting the excavator loaded on a trailer, for example. Meanwhile, the large hydraulic excavator 1 is subjected to height and weight restrictions on its transport route including an underpass, a tunnel, an overpass and a bridge. In this case, the width dimension and the weight of the hydraulic excavator 1 loaded on the trailer must be reduced. This embodiment is described in terms of hydraulic excavator transport by reducing the width dimension of the lower traveling structure 4; and transport by removing a left traveling portion 14 and a right traveling portion from a center frame 5 to reduce the weight, the width dimension and the height dimension.

Next, the configuration of the lower traveling structure 4 of the hydraulic excavator 1 will be described in detail. The definition of the front-rear direction viewed from an operator on board the upper revolving structure 2 varies according to the revolving position of the upper revolving structure 2. In this embodiment, the configuration of the lower traveling structure 4 and the operation of expanding and contracting a vehicle width will be described by defining an idler wheel 10 side as the front side, a drive wheel 9 side as the rear side, and a direction perpendicular to the front-rear direction as the right-and-left direction (width direction).

The lower traveling structure 4 has a larger width dimension than the width dimension of the upper revolving structure 2 so as to stably support the upper revolving structure 2 and the working mechanism 3 during traveling and working operations. However, in a case where the width dimension of the lower traveling structure 4 is formed to be larger than the width dimension of the upper revolving structure 2, the width dimension of the lower traveling structure 4 is beyond a limit width for transport.

To solve this problem, the lower traveling structure 4 is configured to allow the mounting position of left and right side frames 6 relative to a later-described center frame 5 to be moved in the width direction. Specifically, the lower traveling structure 4 is configured to have a reduced width dimension that is within a limit width for transport by disposing the left and right side frames 6 at a shorter interval.

Also, the lower traveling structure 4 is subjected to height and weight restrictions on its transport route including an underpass, a tunnel, an overpass and a bridge. Thus, the lower traveling structure 4 is configured to allow the left and right side frames 6 to be removed, together with the drive wheel 9, the idler wheel 10, a crawler belt 13, and a vehicle width expanding/contracting device 15.

The lower traveling structure 4 is used to travel on irregular terrain, muddy ground and so on. As shown in Figs. 1 to 5, the lower traveling structure 4 is configured to include a later-described center frame 5, the left side frame 6, the right side frame, the drive wheel 9, the idler wheel 10, the crawler belt 13, and the vehicle width expanding/contracting device 15. The left traveling portion 14 is defined by incorporating the drive wheel 9, the idler wheel 10, the crawler belt 13 and the vehicle width expanding/contracting device 15 into the left side frame 6, and the right traveling portion is defined by incorporating the drive wheel, the idler wheel, the crawler belt and the vehicle width expanding/contracting device into the right side frame.

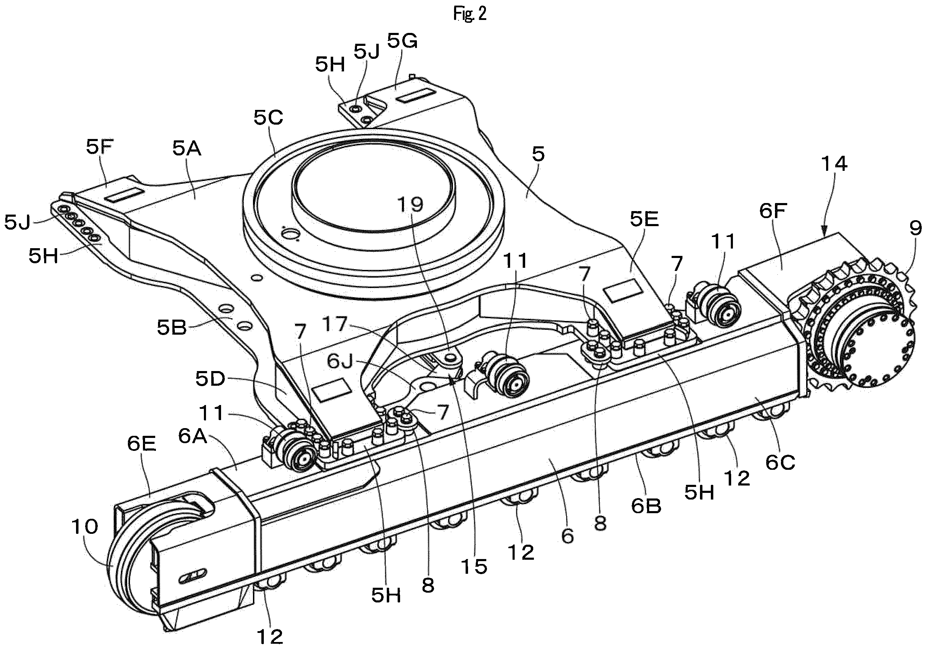

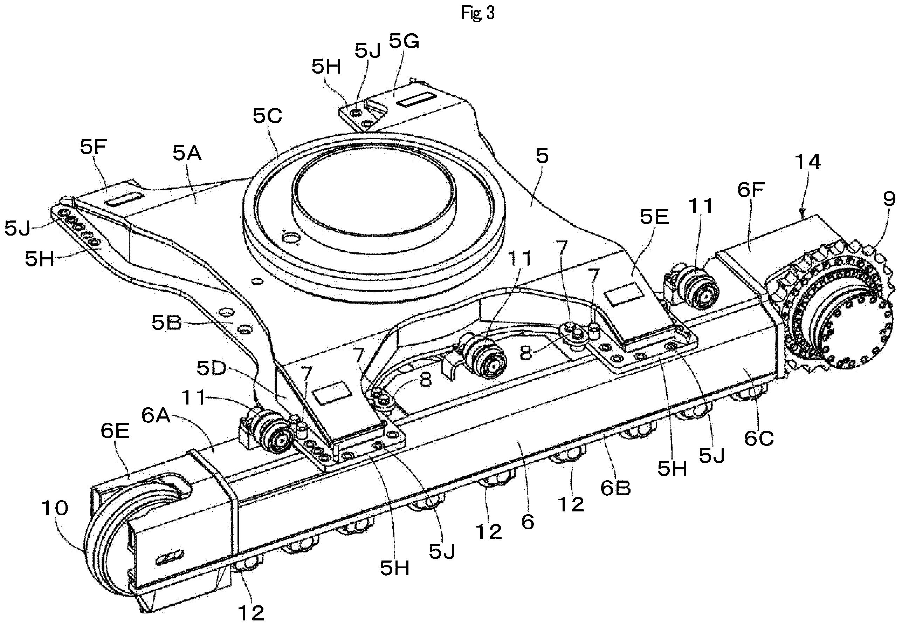

As shown in Figs. 2 and 3, a center frame 5 is provided to be located in the center of the lower traveling structure 4. The center frame 5 is overall formed as a generally H-shaped plate-worked structure by welding a plurality of steel plates. The center frame 5 is configured to include an upper plate 5A and a lower plate 5B opposed to each other at an interval in the vertical direction, a large-diameter cylindrical body 5C provided between the upper plate 5A and the lower plate 5B, a left front leg 5D and a left rear leg 5E extending to the outer side (left side) of the right-and-left direction at an interval in the front-rear direction from the left side of the upper plate 5A and the lower plate 5B, and a right front leg 5F and a right rear leg 5G extending to the outer side (right side) of the right-and-left direction at an interval in the front-rear direction from the right side of the upper plate 5A and the lower plate 5B.

Angle frame-shaped flange portions 5H are each provided on the lower portion side of the left front leg 5D, the left rear leg 5E, the right front leg 5F and the right rear leg 5G. Each of the flange portions 5H is provided with a plurality of bolt through holes 5J at predetermined intervals so as to penetrate in the vertical direction. A later-described bolt 7 is inserted into each of the bolt through holes 5J to mount the left side frame 6 and other parts.

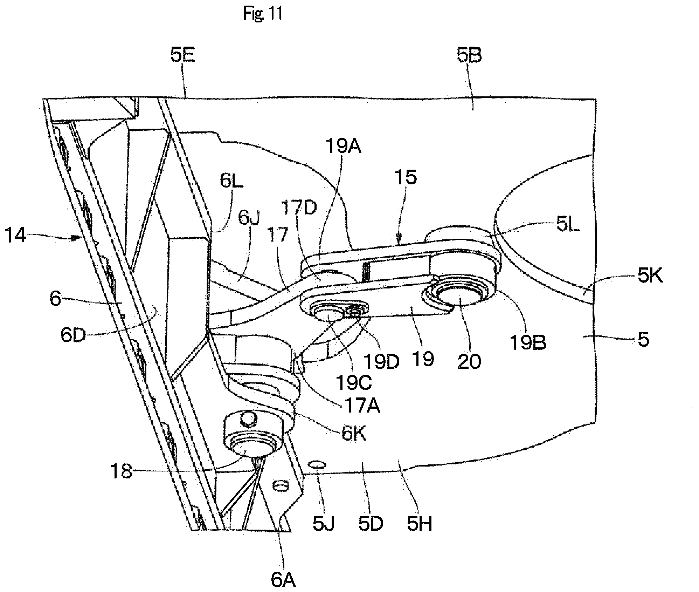

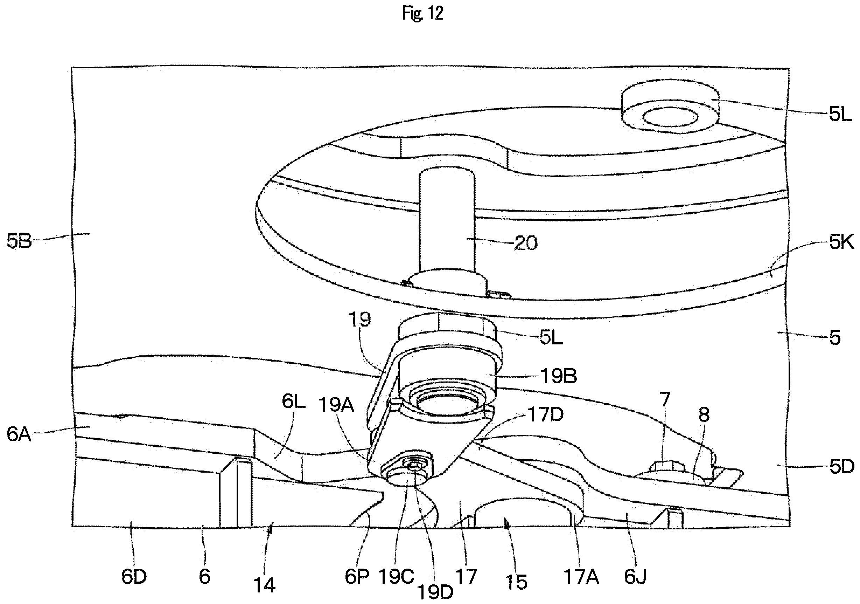

As shown in Figs. 11 and 12, a circular opening 5K for maintenance is provided at the lower plate 5B in the center thereof, and cylindrical mounting portions 5L are provided on the left and right sides of the lower plate 5B so as to interpose the circular opening 5K, with the vertical direction serving as the axis line. A pin member 20 is inserted into the left mounting portion 5L to connect a connecting portion 19 of the left vehicle width expanding/contracting device 15. A pin member (not shown) is inserted into the right mounting portion 5L to connect a right connecting portion.

The center frame 5 has the lower plate 5B formed to be flat. Only the connecting portion 19 supported in a cantilevered manner and a bending link 17 are disposed below the lower plate 5B. This configuration allows the hydraulic excavator 1 to maintain a large minimum ground height dimension from the ground to the lower plate 5B of the center frame 5.

As shown in Figs. 2 and 3, the left side frame 6 is mounted on the left side of the center frame 5, that is, on the left front leg 5D and the left rear leg 5E. A right side frame (not shown) is symmetrical to the left side frame 6 in shape in the right-and-left direction, and mounted on the right side of the center frame 5, that is, on the right front leg 5F and the right rear leg 5G. In this case, the left side frame 6 and the right side frame are movable in the right-and-left direction relative to the center frame 5. The right side frame (right traveling portion) is not illustrated or described due to its symmetry to the left side frame 6 (left traveling portion 14) in shape in the right-and-left direction.

The left side frame 6 is formed as an angular tubular body composed of an upper plate 6A, a lower plate 6B, an outer plate 6C and an inner plate 6D extending in the front-rear direction. An idler wheel bracket 6E is provided forward of the upper plate 6A, the lower plate 6B, the outer plate 6C and the inner plate 6D, and a drive wheel bracket 6F is provided backward of the upper plate 6A, the lower plate 6B, the outer plate 6C and the inner plate 6D. The left front leg 5D, the left rear leg 5E and later-described three upper rollers 11 are mounted on the upper plate 6A. Later-described nine lower rollers 12 are mounted on the lower plate 6B.

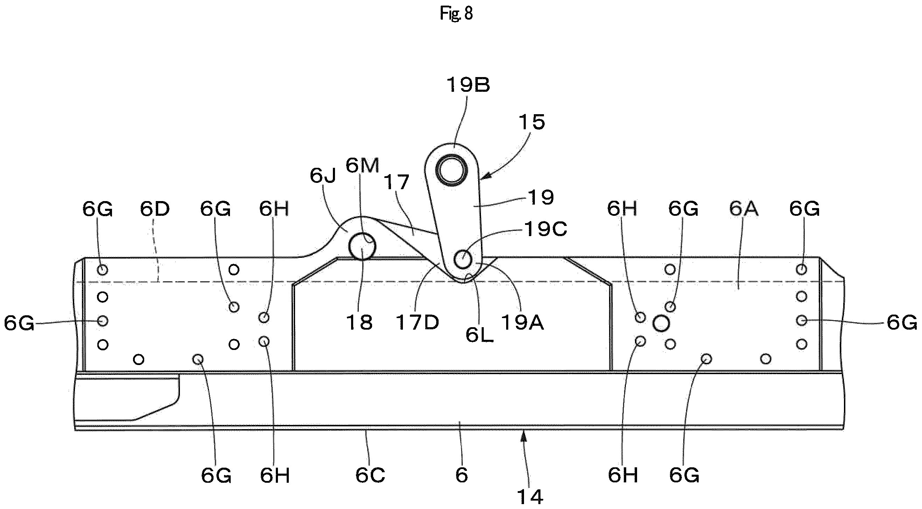

A plurality of screw holes 6G, 6H (see Fig. 8) is provided on the upper plate 6A between an intermediate upper roller 11 and a front upper roller 11, and between the intermediate upper roller 11 and a rear upper roller 11. The plurality of screw holes 6G is disposed in U-shape so as to correspond to the bolt through holes 5J provided at the flange portions 5H of the left front leg 5D and the left rear leg 5E, and bolts 7 mounting the left front leg 5D and the left rear leg 5E are threadedly engaged with the screw holes. Also, bolts 7 mounting a leg guide 8 are threadedly engaged with the plurality of screw holes 6H.

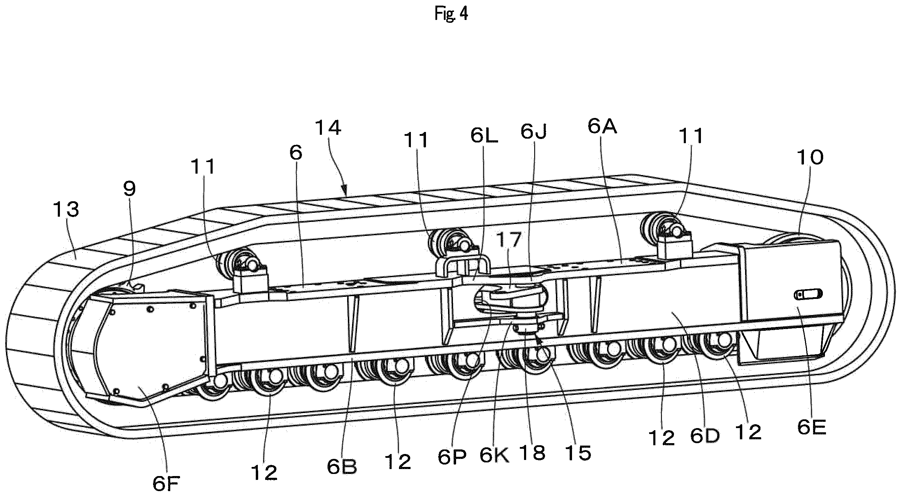

As shown in Fig. 8, the upper mounting plate 6J is formed on the left side frame 6 by extending an intermediate portion of the upper plate 5A in the front-rear direction to the inner side (right side) in the right-and-left direction. As shown in Figs. 4, 5, and 10, the left side frame 6 includes a lower mounting plate 6K so as to be parallel to the mounting plate 6J at an intermediate position of the inner plate 6D in the vertical direction away downwardly from the upper mounting plate 6J. The upper mounting plate 6J and the lower mounting plate 6K constitute a pair of mounting plates opposed to each other at an interval in the vertical direction. Herein, since the mounting plates 6J, 6K are disposed to be closer to the upper side of the side frame 6, a later-described bending link 17 mounted between the mounting plates 6J, 6K can be disposed to be closer to the lower plate 5B of the center frame 5.

Moreover, a notched portion 6L is formed on the upper mounting plate 6J to be free from interference with the connecting portion 19 when the left side frame 6 is moved rightward to contract the vehicle width. This configuration of the notched portion 6L allows the connecting portion 19 to be disposed at a height position equivalent to the upper plate 5A. More advantageously, the notched portion 6L can be free from interference with the connecting portion 19 to significantly move the side frame 6 in the right-and-left direction.

Also, a pin hole 6M is provided on each of the mounting plates 6J, 6K so as to be located forward of the revolving center of the upper revolving structure 2 (the center of the cylindrical body 5C of the center frame 5) and to penetrate in the vertical direction. The pin hole 6M provided on each of the mounting plates 6J, 6K can firmly support a later-described link pin 18 (bending link 17) in a doubly supported manner.

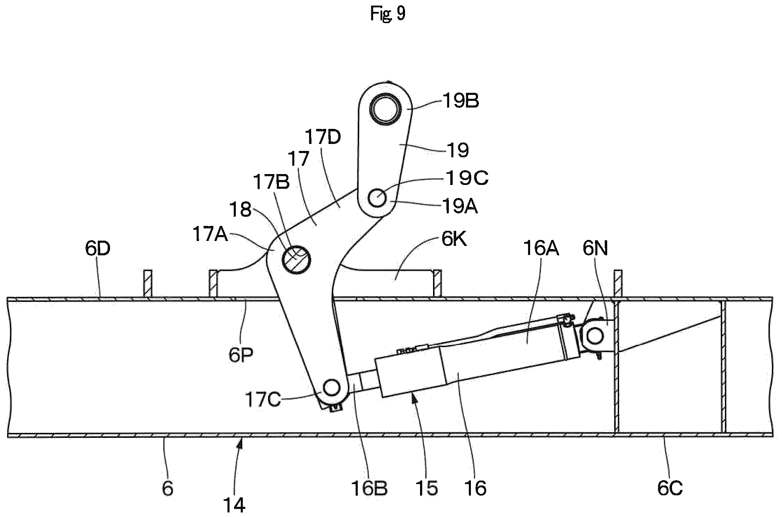

As shown in Fig. 9, a cylinder bracket 6N is provided to be closer to the rear side of the left side frame 6. The cylinder bracket 6N is, for example, mounted on the inner plate 6D, etc. Although the pin hole 6M is disposed to be closer to the front side and the cylinder bracket 6N is disposed to be closer to the rear side, the pin hole 6M may be disposed to be closer to the rear side and the cylinder bracket 6N may be disposed to be closer to the front side. Further, a link through opening 6P is provided on the inner plate 6D to be located between the mounting plates 6J, 6K.

The left side frame 6 is mounted on the left front leg 5D and the left rear leg 5E by threadedly engaging the bolt 7 inserted into each of the bolt through holes 5J of the flange portion 5H with a corresponding screw hole 6G, with the left front leg 5D and the left rear leg 5E of the center frame 5 placed on the upper plate 6A. In this case, the side frame 6, as shown in Fig. 2, is mounted on the left front leg 5D and the left rear leg 5E with numerous bolts 7 so as to withstand loads during traveling and working operations in large-width form (working form) where the side frame 6 is moved leftward to expand the vehicle width. On the other hand, the side frame 6, as shown in Fig. 3, is mounted on the left front leg 5D and the left rear leg 5E with only a few bolts 7 due to lower loads in small-width form (transporting form) where the side frame 6 is moved rightward to contract the vehicle width.

The leg guide 8 is provided on the upper plate 5A of the left side frame 6 to be adjacent to the rear side of the left front leg 5D and the front side of the left rear leg 5E. Two leg guides 8 guide the flange portion 5H of the left front leg 5D and the flange portion 5H of the left rear leg 5E such that the side frame 6 is moved in parallel to the left front leg 5D and the left rear leg 5E in the right-and-left direction by interposing the flange portions 5H with the upper plate 5A at an interval. The two leg guides 8 are mounted on the upper plate 5A by threadedly engaging the bolt 7 inserted in the vertical direction with the screw hole 6H.

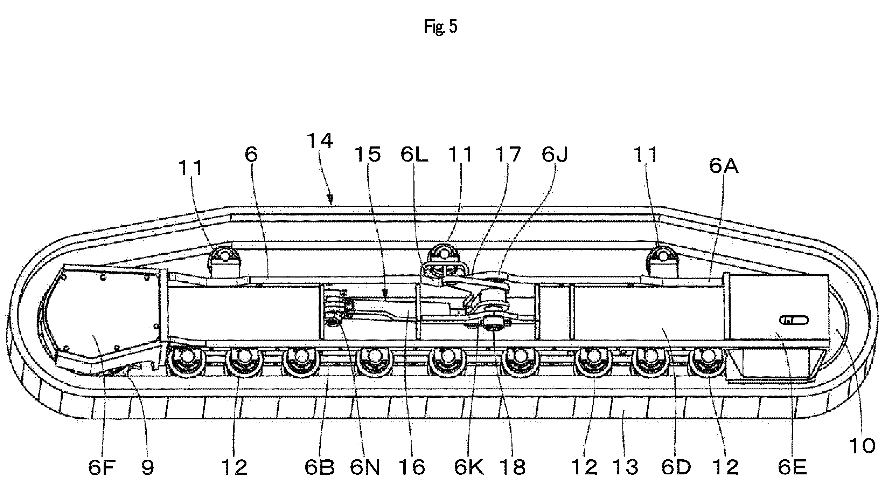

As shown in Figs. 1 and 5, the drive wheel 9 is provided on the drive wheel bracket 6F of the side frame 6. The drive wheel 9 is rotatively driven, with the hydraulic motor serving as a power source. The idler wheel 10 is provided on the idler wheel bracket 6E of the side frame 6. The idler wheel 10 is urged forward by a crawler belt tensioning device (not shown).

A plurality of, for example, three upper rollers 11 are provided on the upper plate 5A of the side frame 6 at intervals in the front-rear direction. The upper rollers 11 guide the crawler belt 13 upward of the side frame 6 in the front-rear direction. A plurality of, for example, nine lower rollers 12 are provided on the lower plate 5B of the side frame 6 at intervals in the front-rear direction. The lower rollers 12 guide the crawler belt 13 downward of the side frame 6 in the front-rear direction.

The crawler belt 13 is provided to be looped around the drive wheel 9 and the idler wheel 10. The crawler belt 13 is configured to include a plurality of annularly connected track links and a plurality of shoes mounted on the outer peripheral side of the plurality of track links. The crawler belt 13 revolves between the drive wheel 9 and the idler wheel 10 by rotatively driving the drive wheel 9.

Herein, the left traveling portion 14 will be described. The left traveling portion 14 is moved in the right-and-left direction relative to the center frame 5 or removed from the center frame 5 when the hydraulic excavator 1 is transported. The left traveling portion 14 is configured to include the side frame 6, the drive wheel 9, the idler wheel 10, the three upper rollers 11, the nine lower rollers 12, the crawler belt 13 and a later-described left vehicle width expanding/contracting device 15. A right traveling structure is configured similarly to the left traveling portion 14.

Next, the configuration and the expanding and contracting operation of the left vehicle width expanding/contracting device 15 that configures the characterizing portion of an embodiment of the present invention will be explained. A right vehicle width expanding/contracting device is not described due to its structure similar to the left vehicle width expanding/contracting device 15.

The left vehicle width expanding/contracting device 15 constitutes part of the left traveling portion 14. That is, the vehicle width expanding/contracting device 15 is a component removed when the left traveling portion 14 is removed from the center frame 5. In other words, the vehicle width expanding/contracting device 15 is transported separately from the center frame 5 and the upper revolving structure 2.

The left vehicle width expanding/contracting device 15 expands and contracts a vehicle width by moving the left side frame 6 in the right-and-left direction relative to the center frame 5 by extending and contracting a rod 16B of a later-described hydraulic cylinder 16. The left vehicle width expanding/contracting device 15 is configured to include a later-described hydraulic cylinder 16, a bending link 17, a link pin 18, a connecting portion 19, and a pin member 20.

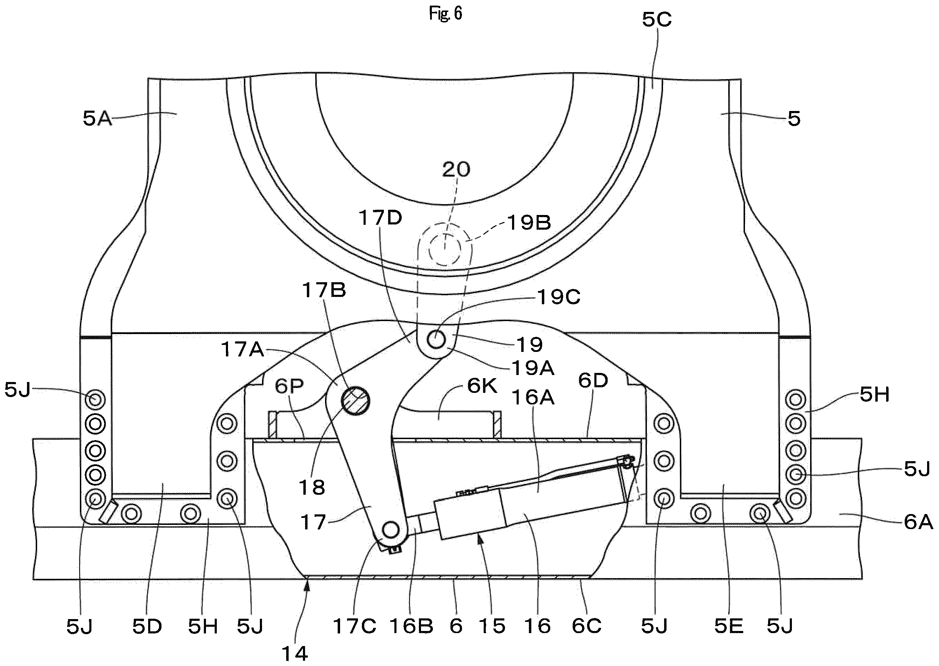

As shown in Figs. 6, 7, and 9, the hydraulic cylinder 16 is disposed within the left side frame 6. Specifically, the hydraulic cylinder 16 is provided to extend in the front-rear direction along the side frame 6 so as to be accommodated between the outer plate 6C and the inner plate 6D. In addition, the hydraulic cylinder 16 is located between the drive wheel 9 and the idler wheel 10 and mounted on the side frame 6.

The hydraulic cylinder 16 includes a cylindrical tube 16A, a piston (not shown) inserted to be axially movable into the tube 16A, and a rod 16B having one end connected to the piston in the tube 16A and other end projecting from the tube 16A. The hydraulic cylinder 16 has the tube 16A having one end mounted rotatably on the cylinder bracket 6N of the side frame 6 in the horizontal direction, with the vertical direction serving as the axis line. Also, the other end of the rod 16B is mounted rotatably on one end portion 17C of a bending link 17 in the horizontal direction.

Herein, in a case where the hydraulic cylinder is provided on the center frame, it is hard to employ a large (high output) hydraulic cylinder in order to reduce the weight of the center frame and the upper revolving structure for transport. Even in a case where the hydraulic cylinder is disposed below the center frame, it is hard to employ a large hydraulic cylinder in order to prevent reduction in the minimum ground height. Further, in a case where the hydraulic cylinder is disposed below the center frame, the hydraulic cylinder can be hit by rocks, concrete pieces and others, and earth and sand, dust and other objects can adhere to and accumulate on the hydraulic cylinder.

On the other hand, in a configuration where the hydraulic cylinder 16 is provided on the side frame 6, as in this embodiment, the hydraulic cylinder 16 is also removed when the left traveling portion 14 is removed for transport. Thus, the hydraulic cylinder 16 can be formed by a large hydraulic cylinder having high output because its weight can be separate from the transport weight on the center frame 5 side. In addition, in a configuration where the hydraulic cylinder 16 is provided on the side frame 6, the minimum ground height can be larger, because no hydraulic cylinder is present below the center frame 5. Further, the hydraulic cylinder 16 can be protected from rocks, concrete pieces, earth and sand, dust, etc. by the side frame 6.

The bending link 17 is disposed at an intermediate portion of the left side frame 6 in the front-rear direction. The bending link 17 is formed as an L-shaped structure such that the intermediate portion in a length direction bends as a bending portion 17A. Specifically, as shown in Figs. 6, 7, and 9, the bending link 17 has a pin hole 17B at the bending portion 17A, with the hydraulic cylinder 16 connected to one end portion 17C extending from the bending portion 17A into the side frame 6. The bending link 17 has other end portion 17D extending from the bending portion 17A, with the other end portion 17D bending relative to the one end portion 17C, for example, at approx. 90 to 130 degrees.

The bending link 17 is mounted rotatably on the side frame 6 in the horizontal direction by disposing the bending portion 17A between the mounting plates 6J, 6K of the left side frame 6 and inserting the link pin 18 into the pin hole 6M and the pin hole 17B. In this state, a tip of the rod 16B of the hydraulic cylinder 16 is connected rotatably to the one end portion 17C of the bending link 17. Meanwhile, one end portion 19A of a later-described connecting portion 19 is connected rotatably to the other end portion 17D of the bending link 17.

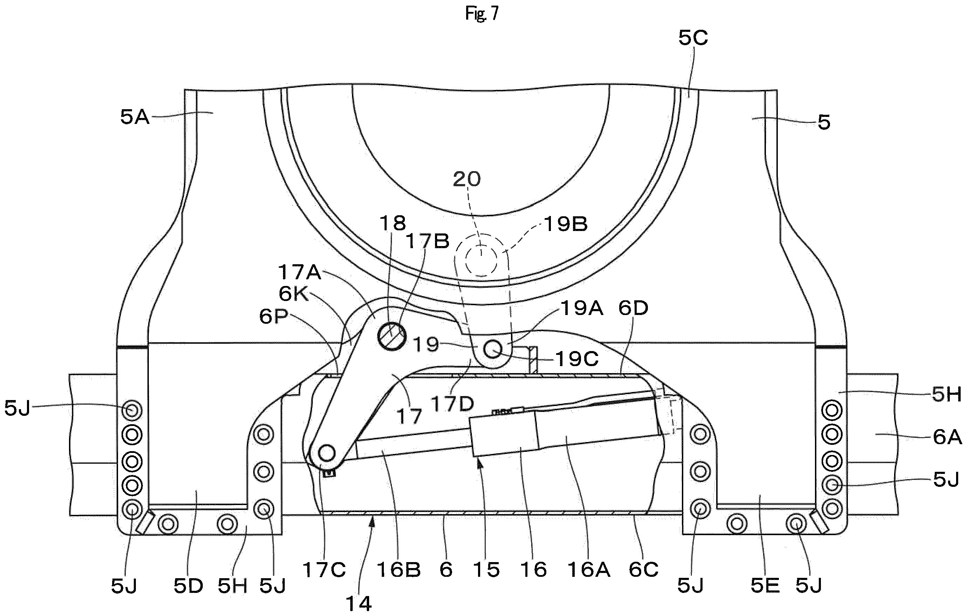

Accordingly, as shown in Fig. 6, the bending link 17 allows the other end portion 17D to rotate inwardly in the right-and-left direction (rightward) when the rod 16B of the hydraulic cylinder 16 is contracted to rotate the one end portion 17C rearward. In addition, as shown in Fig. 7, the bending link 17 allows the other end portion 17D to rotate outwardly in the right-and-left direction (leftward) when the rod 16B of the hydraulic cylinder 16 is extended to rotate the one end portion 17C frontward. The operation of the bending link 17 allows the hydraulic cylinder 16 to be disposed to extend into the side frame 6 in the front-rear direction.

Further, the bending link 17 is disposed at an intermediate portion of the side frame 6 in the front-rear direction. Accordingly, when a force is applied via the bending link 17 to move the left traveling portion 14, expanding and contracting forces can equally be transmitted to the front side and rear side of the left traveling portion 14. The bending link 17 is mounted between the mounting plates 6J, 6K in a doubly supported manner, resulting in high mounting strength and stable operability.

A connecting portion 19 connects the other end portion 17D of the bending link 17 and the center frame 5. The connecting portion 19 is provided rotatably on the lower surface side of the lower plate 5B of the center frame 5 in a cantilevered manner. Specifically, the connecting portion 19 is connected rotatably to the other end portion 17D with a connecting pin 19C in the horizontal direction, with the one end portion 19A in the length direction interposing the other end portion 17D of the bending link 17, by disposing oval plate bodies at an interval to be opposed to each other in the vertical direction. Herein, the connecting pin 19C can be withdrawn downwardly relative to the connecting portion 19 with easy operations by removing a retaining bolt 19D (see Figs. 11 and 12).

Meanwhile, as shown in Fig. 12, other end portion 19B of the connecting portion 19 is defined as a cylindrical boss portion, and the pin member 20 inserted into the boss portion of the other end portion 19B is inserted at the mounting portion 5L provided on the lower plate 5B of the center frame 5. Accordingly, the other end portion 19B of the connecting portion 19 is mounted rotatably at the mounting portion 5L of the center frame 5 in a cantilevered manner. The pin member 20 is retained with, for example, bolts, nuts and other fastening tools on the upper surface side of the lower plate 5B. Such a mounting structure is characterized only by the connecting portion 19 disposed below the lower plate 5B of the center frame 5 to successfully maintain a large minimum ground height dimension of the center frame 5.

The vehicle width expanding/contracting device 15 of this embodiment is configured as described above, and subsequently, the operation of expanding and contracting the vehicle with of the lower traveling structure 4 using the vehicle width expanding/contracting device 15 will be explained.

First, the operation of contracting the width dimension of the lower traveling structure 4 to move the hydraulic excavator 1 from working form to transporting form will be described. Specifically, the above operation is to move the left traveling portion 14 rightward and the right traveling portion leftward.

Initially, the bolts 7 fixing the left front leg 5D and the left rear leg 5E of the center frame 5 to the left side frame 6 are unscrewed. Likewise, bolts fixing the right front leg 5F and the right rear leg 5G of the center frame 5 to the right side frame are unscrewed (state in Fig. 6). In this state, as shown in Fig. 7, the one end portion 17C of the bending link 17 is rotated frontward and the other end portion 17D is rotated leftward by extending the rod 16B of the hydraulic cylinder 16 of the left vehicle width expanding/contracting device 15. At this time, the other end portion 17D of the bending link 17 is connected to the center frame 5 via the connecting portion 19, thereby moving the left side frame 6, that is, the left traveling portion 14 rightward (to the center frame 5 side). Likewise, the right traveling portion is moved by the right vehicle width expanding/contracting device leftward (to the center frame 5 side). This mechanism allows the lower traveling structure 4 to dispose the left traveling portion 14 and the right traveling portion at a shorter interval to contract the vehicle width dimension.

Accommodating the vehicle width dimension of the lower traveling structure 4 within the transport limit width fixes the left side frame 6 and the right side frame to the legs 5D to 5G of the center frame 5 with the bolts 7. Accordingly, the hydraulic excavator 1 has a width dimension within the transport limit width including the lower traveling structure 4 to allow for loading on a trailer for transport.

Next, the operation of reducing the height dimension and the transport weight due to height restriction and weight restriction in a transport route of the hydraulic excavator 1 including an underpass, a tunnel, an overpass and a bridge will be described. In this case, the bolts 7 fixing the left and right side frames 6 to the legs 5D to 5G of the center frame 5 are unscrewed. Subsequently, the connecting pin 19C connecting the left bending link 17 to the connecting portion 19 is withdrawn to separate the bending link 17 from the connecting portion 19. In addition, the connecting pin connecting the right bending link to the connecting portion is withdrawn to separate the right bending link from the connecting portion. Further, each hydraulic line is detached. This operation allows for separation of the center frame 5, the left side frame 6, and the right side frame. Subsequently, a transport body, composed of the upper revolving structure 2 and the center frame 5, is lifted and loaded on a transport trailer. Accordingly, the height dimension and the transport weight can be reduced for transport.

Thus, according to this embodiment, the left vehicle width expanding/contracting device 15 is configured to expand and contract a vehicle width of the lower traveling structure 4 by moving the left side frame 6 in the right-and-left direction relative to the center frame 5 by extending and contracting the rod 16B of the hydraulic cylinder 16, and similarly, the right vehicle width expanding/contracting device is configured to expand and contract the vehicle width of the lower traveling structure 4 by moving the right side frame in the right-and-left direction. Based upon this configuration, the hydraulic cylinders 16 of the left and right vehicle width expanding/contracting devices 15 are each located between the drive wheel 9 and the idler wheel 10 and are each mounted on the side frame 6.

Therefore, in the hydraulic excavator 1, the left and right side frames 6 (the left traveling portion 14 and the right traveling portion) can be removed from the center frame 5 to remove the left and right vehicle width expanding/contracting devices 15 including the hydraulic cylinders 16 as well. This operation can reduce the weight of the transport body, composed of the upper revolving structure 2 and the center frame 5. As a result, the hydraulic excavator 1 can be transported with easy operations. In addition, the hydraulic cylinder 16 used can be a large and high-output hydraulic cylinder, which is desirably provided on the side frame 6, to smoothly expand and contract the vehicle width.

The configuration of mounting the hydraulic cylinder 16 on the side frame 6 allows a large minimum ground height to be maintained between the ground and the lower plate 5B of the center frame 5. This configuration inhibits the center frame 5 from interfering with concrete pieces, reinforcing bars and others during traveling and working operations to improve the operational efficiency of vehicles that are allowed to travel at more working sites.

The side frame 6 is formed as a cylindrical body, and the hydraulic cylinder 16 is disposed within the side frame 6. Accordingly, the hydraulic cylinder 16 can be protected from rocks, concrete pieces, earth and sand, dust, etc.

The vehicle width expanding/contracting device 15 includes the hydraulic cylinder 16 provided to extend in the front-rear direction along the side frame 6, the bending link 17 allowing the other end portion 17D to rotate in the right-and-left direction by mounting rotatably the bending portion 17A on the side frame 6 and rotating the one end portion 17C to which the rod 16B of the hydraulic cylinder 16 is connected in the front-rear direction, and the connecting portion 19 connecting the other end portion 17D of the bending link 17 and the center frame 5. Accordingly, the bending link 17 can switch the operation of the one end portion 17C in the front-rear direction to the operation of the other end portion 17D in the right-and-left direction. This mechanism allows the hydraulic cylinder 16 to be provided to extend in the front-rear direction along the side frame 6.

The bending link 17 is disposed at the intermediate portion of the side frame 6 in the front-rear direction. Accordingly, when forces are applied via the bending link 17 to move the left traveling portion 14, the resulting expanding and contracting forces can equally be transmitted to the front side and rear side of the left traveling portion 14.

The connecting portion 19 is provided rotatably on the lower surface side of the lower plate 5B of the center frame 5 in a cantilevered manner. Accordingly, such a configuration is characterized only by the connecting portion 19 supported in a cantilevered manner disposed below the lower plate 5B to successfully maintain a large minimum ground height between the ground and the lower plate 5B of the center frame 5 and thus improve the operational efficiency.

Moreover, the side frame 6 includes the pair of mounting plates 6J, 6K located inwardly in the right-and-left direction and opposed to each other at an interval in the vertical direction and the link pin 18 mounted on the pair of mounting plates 6J, 6K to extend in the vertical direction. The bending portion 17A of the bending link 17 is mounted rotatably on the link pin 18 between the pair of mounting plates 6J, 6K. This configuration allows the bending link 17 to be mounted on the side frame 6 in a doubly supported manner to improve the durability and reliability of operations.

The embodiments are explained by taking the example where one vehicle width expanding/contracting device 15 is provided on the left side frame 6 and one vehicle width expanding/contracting device is provided on the right side frame. However, the present invention is not limited to that, and may be configured to include, for example, two or more vehicle width expanding/contracting devices provided on the left side frame and two or more vehicle width expanding/contracting devices provided on the right side frame.

In the embodiment, the case where the lower traveling structure 4 of the hydraulic excavator 1 is illustrated as a lower traveling structure for a construction machine is described, but the present invention is not limited to that, and for example, can be applied to lower traveling structures for other construction machines such as lower traveling structures of hydraulic cranes.

### DESCRIPTION OF REFERENCE NUMERALS

1: Hydraulic excavator (Construction machine)
2: Upper revolving structure (Vehicle body)
4: Lower traveling structure
5: Center frame
5B: Lower plate
6: Left side frame
6J: Upper mounting plate
6K: Lower mounting plate
9: Drive wheel
10: Idler wheel
13: Crawler belt
14: Left traveling portion
15: Left vehicle width expanding/contracting device
16: Hydraulic cylinder
17: Bending link
17A: Bending portion
17C, 19A: One end portion
17D, 19B: Other end portion
18: Link pin
19: Connecting portion

## Claims

1. A lower traveling structure for a construction machine, comprising:
a center frame located in the center of a vehicle body;
a side frame extending in the front-rear direction, mounted on both left and right sides of the center frame and movable in the right-and-left direction relative to the center frame;
a drive wheel provided on one end of the side frame in a length direction of the side frame;
an idler wheel provided on other end of the side frame in the length direction of the side frame;
a crawler belt looped around the drive wheel and the idler wheel; and
a vehicle width expanding/contracting device expanding and contracting a vehicle width by moving the side frame in the right-and-left direction relative to the center frame by extending and contracting a rod of a hydraulic cylinder, wherein
the hydraulic cylinder of the vehicle width expanding/contracting device is located between the drive wheel and the idler wheel and mounted on the side frame.

2. The lower traveling structure for a construction machine according to claim 1, wherein
the side frame is formed as a cylindrical body, and the hydraulic cylinder is disposed within the side frame.

3. The lower traveling structure for a construction machine according to claim 1, wherein
the vehicle width expanding/contracting device comprises:
the hydraulic cylinder provided to extend in the front-rear direction along the side frame;
a bending link having: a bending portion that is mounted rotatably on the side frame; one end portion to which the hydraulic cylinder is connected; and other end portion, the one end portion being rotated in the front-rear direction to rotate the other end portion in the right-and-left direction; and
a connecting portion connecting the other end portion of the bending link and the center frame.

4. The lower traveling structure for a construction machine according to claim 3, wherein
the bending link is disposed at an intermediate portion of the side frame in the front-rear direction.

5. The lower traveling structure for a construction machine according to claim 3, wherein
the connecting portion is provided rotatably on the lower surface side of a lower plate of the center frame in a cantilevered manner.

6. The lower traveling structure for a construction machine according to claim 3, wherein
the side frame comprises a pair of mounting plates located inwardly in the right-and-left direction and opposed to each other at an interval in the vertical direction and a link pin mounted on the pair of mounting plates so as to extend in the vertical direction, wherein
the bending portion of the bending link is mounted rotatably on the link pin between the pair of mounting plates.
